# EUROPÄISCHE PATENTANMELDUNG

(11) **EP 1 582 979 A2**
(43) Veröffentlichungstag der Anmeldung: **05.10.2005**
(21) Anmeldenummer: 05102039.4
(22) Anmeldetag: 15.03.2005
(51) Int. Cl.: G06F 9/455

(54) **Rechnersystem mit einem in ein Betriebssystem eingebetteten Echtzeitbetriebssystem**

(30) Priorität: 01.04.2004 DE 102004016122
(71) Anmelder: SIEMENS AKTIENGESELLSCHAFT, 80333 München (DE)
(72) Erfinder: Krause, Karl-Heinz, 90475, Nürnberg (DE); Neugebauer, Manfred, 90592, Schwarzenbruck (DE)

(57) **Zusammenfassung**

Die Erfindung betrifft ein Rechnersystem mit einem im Betriebssystem eingebetteten Echtzeitbetriebssystem insbesondere zum Einsatz im Bereich der Automatisierungstechnik für Echtzeitanwendungen, wobei das Rechnersystem zur Aufspaltung einer Echtzeitanwendung zur Ausführung durch das Betriebssystem und durch das Echtzeitbetriebssystem vorgesehen ist. Hierdurch kann auch bei einem nicht-echtzeitfähigen Rechnersystem eine transparente Bereitstellung einer Echtzeitfähigkeit erzielt werden. Echtzeitanwendungen können direkt auf die Daten aller im Rechnersystem ablaufenden Anwendungen zugreifen. Bevorzugt ist dieser Aufruf als Gerätetreiberaufruf innerhalb einer Library-Routine realisiert.

## Beschreibung

Die Erfindung betrifft ein Rechnersystem insbesondere zum Einsatz im Bereich der Automatisierungstechnik für Echtzeitanwendungen. Die Erfindung betrifft weiter ein Verfahren zum Betrieb eines Rechnersystems, insbesondere im Bereich der Automatisierungstechnik für Echtzeitanwendungen, sowie ein Computerprogrammprodukt, das auf einem Rechnersystem ablauffähig ist und das Softwaremittel zur Durchführung eines derartigen Verfahrens aufweist.

Ein derartiges Rechnersystem kommt insbesondere im Bereich der Automatisierungstechnik für Echtzeitanwendungen zum Einsatz. Derartige Echtzeitanwendungen bestehen beispielsweise in der Steuerung und Synchronisation von Antrieben oder Werkzeug- bzw. Produktionsmaschinen. Hierbei müssen beispielsweise Motoren von Roboterarmen im Mikrosekundenbereich synchronisiert werden.

Auf dem Markt bei Rechnersystemen dominierende Standard-Betriebssysteme wie Windows oder Linux können für Anwendungssysteme keine derartige harte Echtzeitfähigkeit bereitstellen. Hierfür gibt es spezialisierte Echtzeitbetriebssysteme, sogenannte Real-Time-Kernel, die jedoch wiederum bei weitem nicht den Funktionsumfang und die Geräteunterstützung der dominierenden nicht-echtzeitfähigen Betriebssysteme besitzen.

Der Erfindung liegt die Aufgabe zugrunde, ein System bzw. ein Verfahren der eingangs genannten Art anzugeben, das auch bei einem konventionellen Betriebssystem möglichst kurze Reaktionszeiten für ein Echtzeitanwendungssystem ermöglicht.

Diese Aufgabe wird durch die in den Ansprüchen 1, 9 und 17 angegebenen Merkmale gelöst.

Der Erfindung liegt die Erkenntnis zugrunde, dass bisherige in Standard-Betriebssysteme integrierte Echtzeit-Lösungen aus einer Zeit gründen, in der das Betriebssystem noch keine sogenannten Multithreaded-Prozesse vollwertig verwalten konnte bzw. derartige Multithreaded-Prozesse nicht etabliert waren. Mittlerweile ist aber die Verwaltung von Multithreaded-Prozessen fest verankert und wird intensiv genutzt. Die erfindungsgemäße Lösung nutzt dieses Multithreading eines Prozesses nun dahingehend, dass die Trennlinie zwischen Echtzeit (Real-Time) und Nicht-Echtzeit (nicht Real-Time) nicht mehr durch eine Prozessgrenze vorgegeben ist, sondern die Trennlinie mitten durch den Prozess geht. Damit enthält ein Prozess nunmehr Threads, die vom Standard-Betriebssystem verwaltet werden (im folgenden erste Threads genannt) und Threads, die vom Echtzeit-Betriebssystem verwaltet werden (im folgenden zweite Threads genannt). Die Real-Time-Threads des Prozesses können damit direkt auf die Ressourcen des gesamten Prozesses zugreifen.

Bei einer Ausgestaltungsform ist hierzu der RT-Kernel als Gerätetreiber in das Standard-Betriebssystem eingebettet.. Kernstück dieser Lösung ist dabei, dass über diesen dynamisch eingebrachten speziellen Gerätetreiber während des Hochlaufs die aktuelle Thread-Ausführung durch einen Aufruf an dieses Gerät aufgespalten werden kann.

Als eine weitere vorteilhafte Ausgestaltungsform ist das Rechnersystem derart ausgebildet, dass dann, wenn der RT-Kernel aktiv wird und einen zweiten Thread ausführt, auch von einer ersten auf eine zweite Systemaufrufeinsprungtabelle umgeschaltet wird. Damit können die für den RT-Kernel (= Echtzeitbetriebssystem) erlaubten Systemaufrufe RT-spezifisch ausführt werden. Insbesondere werden dann die in einem zweiten Thread durchgeführten weiteren Thread-Erzeugungen durch das RT-System ausgeführt. Hierdurch kann die Echtzeitfähigkeit für das nicht-echtzeitfähige Standardbetriebssystem völlig transparent bereitgestellt werden. Der gesamte Prozess kann mit der regulären für das Standard-Betriebssystem bereitgestellten Library gebunden werden, ohne dass das Echtzeitanwendungssystem ein eigenes Erstellungssystem verwenden müsste.

Eine weitere vorteilhafte Realisierung besteht darin, dass die Umschaltung in das Echtzeitbetriebssystem per Aufruf erfolgen kann. Damit kann entweder die Ausführung des gerade aktuellen Threads vom Echtzeitbetriebssystem fortgesetzt werden (Alternative A) oder es kann ein Echtzeitthread zusätzlich erzeugt und seine Ausführung unter dem Echtzeitbetriebssystem gestartet werden (Alternative B). Da dann die von einem solchen initialen Echtzeit-Thread abgegebenen weiteren Thread-Erzeugungsaufrufe wiederum Echtzeit-Threads erzeugen ergibt sich damit die eingangs genannte Aufteilung eines Prozesses in erste Threads und zweite Threads.

Eine weitere vorteilhafte Realisierung besteht darin, dass dieser erstmalige Übergang in das Echtzeitsystem über einen Gerätetreiber erfolgt dessen Aufruf in einer Library-Routine verpackt ist. Ist ein solcher Gerätetreiber und damit das Echtzeitsystem nicht installiert, so wird innerhalb der Library-Routine bei Alternative A der gerade aktuelle Thread als erster Thread fortgesetzt oder bei Alternative B ein erster Thread zusätzlich erzeugt.

Bei einer vorteilhaften Ausgestaltungsform stellt bei beiden Alternativen die Library-Routine einen zusätzlichen Dämon-Thread bereit, der nach der Aufspaltung in einen zusätzlichen Echtzeitthread innerhalb dieser Library-Routine auf Systemmeldungen des Echtzeitbetriebssystems wartet und diese verarbeitet. Damit können komplexere Systemfunktionen, die die Echtzeitfähigkeit stören würden, trotzdem für das Echtzeitsystem bereitgestellt werden. Beispiele sind Ausgaben an ein Terminal oder die Bereitstellung von zusätzlichem Speicher.

Im Folgenden wird die Erfindung anhand der in den Figuren dargestellten Ausführungsbeispiele näher beschrieben und erläutert. Es zeigen:
- FIG 1: eine schematische Darstellung eines bisherigen Rechnersystems mit eingebettetem Echtzeitkernel zum Einsatz für Echtzeitanwendungen,
- FIG 2: eine schematische Darstellung eines Rechnersystem mit im Betriebssystem eingebetteten Echtzeitanwendungssystem mit Aufteilung eines Prozesses in vom Echtzeitbetriebssystem und vom Standardbetriebssystem verwalteten Threads,
- FIG 3: eine Prinzipdarstellung einer Library-Funktion, innerhalb der durch einen Gerätetreiberaufruf die aktuelle Threadausführung unter Kontrolle eines RT-Kernels gebracht wird,
- FIG 4: eine Prinzipdarstellung einer Library-Funktion, innerhalb der durch einen Gerätetreiberaufruf ein Thread erzeugt wird, der unter Kontrolle eines RT-Kernels gestartet wird, und
- FIG 5: eine schematische Darstellung eines ersten Rechnersystem mit im Betriebssystem eingebetteten Echtzeitanwendungssystem mit Binärkompatibilität mit einem zweiten Rechnersystem.

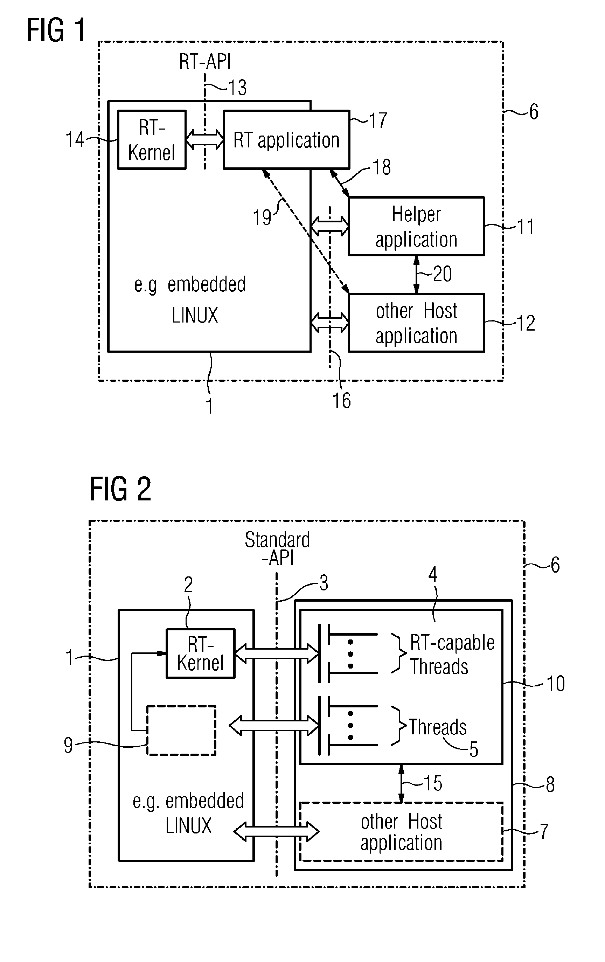

FIG 1 zeigt eine schematische Darstellung eines bisherigen Rechnersystems 6 zum Einsatz für Echtzeitanwendungen. Das Rechnersystem 6 besteht im wesentlichen aus einem Betriebssystem 15 mit einen im Betriebssystem installierten Echtzeitsystem 14 (= Real-Time-Kernel). Dieser Real-Time-Kernel kommuniziert über eine Schnittstelle 13 mit einer Echtzeitanwendung 17. Die Echtzeitanwendung 17 sowie das Betriebssystem 15 kommunizieren mit einer Hilfsanwendung 11 (Helper Application) sowie mit anderen Betriebssystemanwendungen 12 (Other Host Applications) über eine weitere Schnittstelle 16. Bei dem in FIG 1 dargestellten Rechnersystem 6 läuft das Echtzeitsystem 14 mit seinem Anwendungsprogramm 17 aus Sicht des Betriebssystems 15 somit direkt als sogenannte Interrupt-Service-Routine ISR. Hierdurch erhält das Echtzeitanwendungsprogramm eine höhere Priorität als alle anderen Aktivitäten des Betriebssystems, insbesondere aller anderen Gerätetreiber. Insgesamt ist bei dem in FIG 1 dargestellten Ausführungsbeispiel somit das Echtzeitanwendungssystem 14 sowie auch das Echtzeitanwendungsprogramm 17 mehr oder minder klar von den sonstigen Anwendungsprogrammen 12 des Betriebssystems 15 getrennt. Diese Trennung betrifft sowohl die Erstellung und das Laden eines Programms als auch die Kommunikation mit anderen Anwendungsprogrammen.

FIG 2 zeigt eine schematische Darstellung eines Rechnersystems 6 mit im Betriebssystem 1 eingebetteten Echtzeitbetriebssystem 2. Das Betriebssystem 1 ist über eine StandardSchnittstelle 3 mit im folgenden auch als Echtzeit-Threads bezeichneten ersten Threads 4 sowie mit im folgenden auch als Nicht-Echtzeit-Threads bezeichneten zweiten Threads 5 koppelbar. Der Block 10, der die Echtzeit-Threads 4 sowie die Nicht-Echtzeit-Threads 5 umfasst, ist über eine Schnittstelle 15 mit anderen Anwendungsprogrammen 7 koppelbar, die wiederum über die Standardschnittstelle 3 mit dem Betriebssystem 1 für Kommunikationszwecke verbindbar sind.

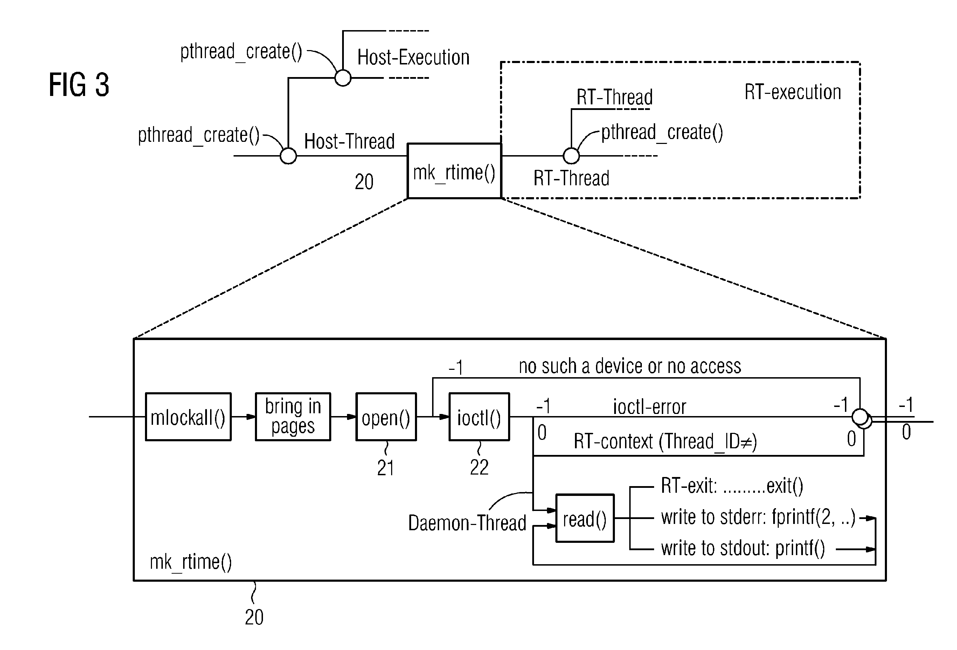

Die Besonderheit des in FIG 2 dargestellten Rechnersystems 6 besteht im wesentlichen darin, dass das Betriebssystem 1 einen speziellen Gerätetreiber 9 aufweist, über den per Aufruf während des Hochlaufs eine Thread-Ausführung erstmalig an den RT-Kernel übertragen wird. Eine mögliche Realisierung eines derartigen Geräteaufrufs zum Aufspalten der Ausführung besteht beispielsweise innerhalb einer Library-Routine, wie dies im Zusammenhang mit FIG 3 noch näher erläutert wird.

FIG 3 zeigt eine Prinzipdarstellung der Library-Routine zur Übertragung der Threadausführung an den RT-Kernel über einen Gerätetreiber-Aufruf. Dort wird diese Library-Routine mk_rtime() genannt. Innerhalb dieser Library-Routine wartet der Thread des Host-Systems nur auf Systemmeldungen des RT-Systems und verarbeitet diese. Er verlässt also mk_rtime() nie. Nach außen wirkt also der Aufruf mk_rtime () so, als ob die Ausführung des aktuellen Threads vom Host-System an den RT-Kernel übergeben wurde. Wann immer der RT-Kernel aktiv wird und einen Thread ausführt, wird auch auf eine andere Systemeinsprungtabelle umgeschaltet. Damit können die für den RT-Kernel erlaubten Systemaufrufe RT-spezifisch ausführt werden. Insbesondere werden dann die in diesem Thread durchgeführten weiteren Thread-Erzeugungen durch das RT-System ausgeführt.

Die Implementierung des Geräteaufrufs *mk_rtime()* des Echtzeitbetriebssystems Systems basiert auf einem speziellen Gerätetreiber. Über die "standardisierte" interne Gerätetreiberschnittstelle wird man beim Einsatz des Betriebssystems LINUX damit weitgehend unabhängig von der Linux-Weiterentwicklung. Ist kein RT-System installiert, so wird ein entsprechender *open()* Aufruf 21 abgewiesen. Der *open ()* Aufruf 21 stellt auch die exklusive Benutzung für nur einen Prozess sicher. Konnte das RT-Device erfolgreich geöffnet werden, so kann über das geöffnete "RT-Gerät" dann per Aufruf 22 ioctl (.., IOCNTRL_MK_RTIME, ..) in die RT-Domain geschaltet werden. Genauer gesagt der Aufruf wirkt ähnlich einem fork(), d.h. der dem Aufruf folgende Code wird auch in der RT-Domain ausgeführt. Ist der Aufruf 22 *ioctl ()* erfolgreich, so wird der Code -wie in FIG 3 gezeigt - in beiden Domains mit dem Wert 0 fortgesetzt. Zur Unterscheidung zwischen den beiden Domains wird abhängig von der Thread ID verzweigt, denn im Linux-Kontext ist die Thread ID vor und nach dem *ioctl() -* Aufruf gleich. Der Linux-Thread kehrt im Gutfall nie aus dem *mk_rtime()* zurück, d.h. in der Linux-Domain wird *mk_rtime()* immer nur mit dem Returnwert -1 verlassen. Die Anwendung kann dann entscheiden (errno-Wert), ob sie die Ausführung (im Host-Kontext) fortsetzen will oder nicht. Der Aufruf *mk_rtime ()* wird also immer nur von einem Thread verlassen. Für diesen gilt, dass der Stack vor und nach dem Aufruf *mk_rtime()* identisch ist. Diese Architektur stellt damit das RT-System transparent bereit, d.h. wenn kein RT-System vorhanden ist, kann der RT-Teil der Anwendung auch unverändert unter dem Host-Betriebssystem (z.B. LINUX) ausgeführt werden.

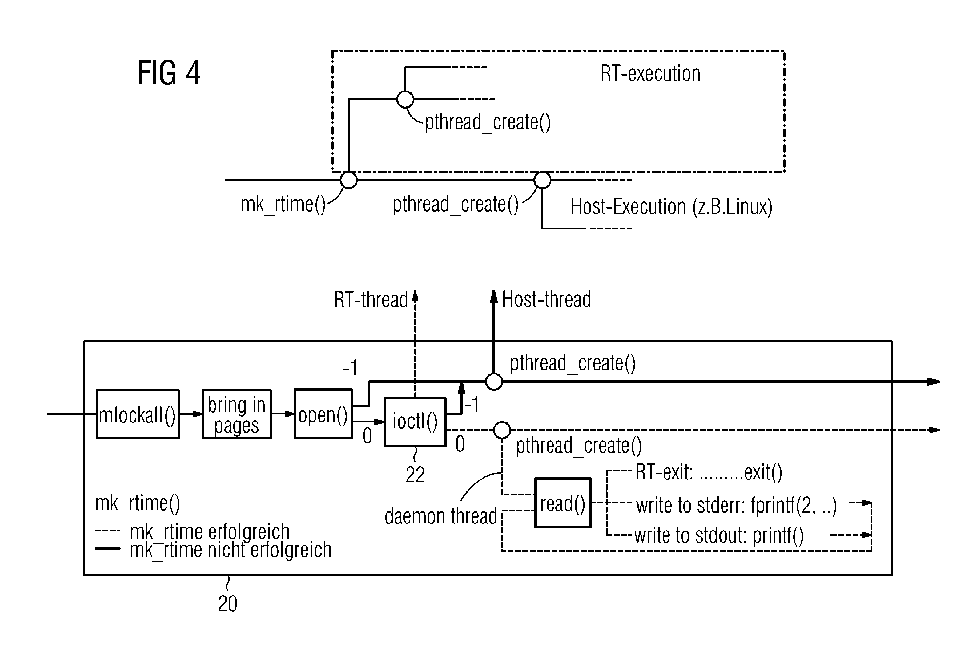

FIG 4 zeigt eine Prinzipdarstellung der Library-Routine die per Gerätetreiber-Aufruf einen (initialen) Threads erzeugt, der unter der Kontrolle des RT-Kernels ausgeführt wird. Hier gilt das Gleiche wie bei FIG 4, d.h. auch hier erfolgt die Erzeugung durcheinen Gerätetreiberaufruf (22).

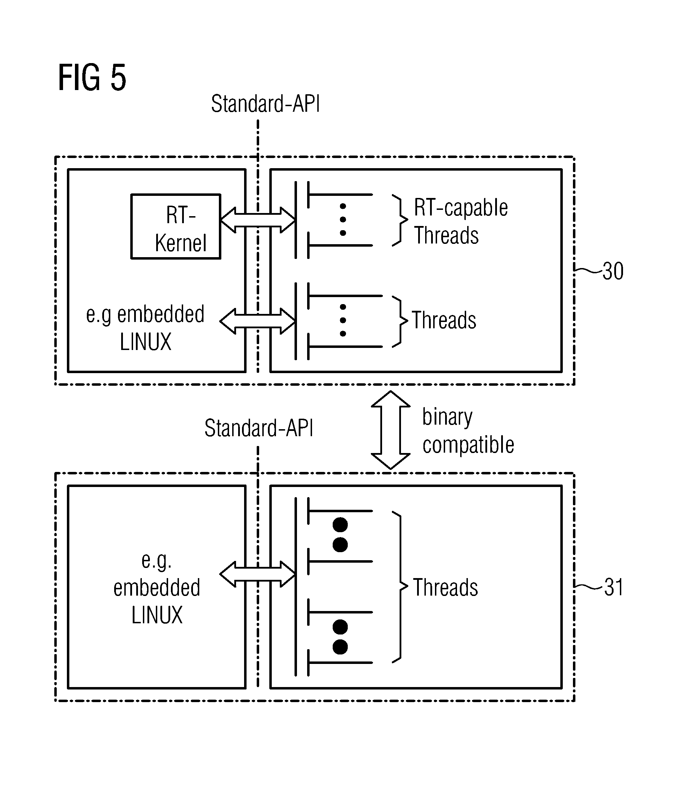

Bei beiden Verfahren ergibt sich der in FIG 5 gezeigte Endzustand bei dem die Trennlinie zwischen Real-Time und Nicht-Real-Time innerhalb eines Prozesses gegegen ist, d.h. die Aufteilung eines Prozesses erfolgt in Threads, die vom RT-System verwaltet werden, und in Threads, die vom "Host"-System verwaltet werden. Es erfolgt eine Umschaltung der Systemaufrufeinsprungtabelle abhängig davon, welches System gerade aktiv ist. Damit ist es möglich, Systemaufrufe spezifisch auszuführen. Beispielsweise führt der in FIG 5 gezeigte Aufruf *pthread_create()* entweder zur Erzeugung eines Host-Threads oder zur Erzeugung eines RT-Threads. Damit kann die gleiche Library für das RT-System und das Host-System benutzt und damit das RT-System völlig transparent bereitgestellt werden. Eine erstmalige Umschaltung während des Hochlaufs wird dadurch sichergestellt, dass alle Threads eines Prozesses durch Aufruf an einen speziellen Gerätetreiber erzeugt werden. Durch diesen Aufruf wird entweder der laufende Thread zu einem RT-Thread oder es wird ein neuer RT-Thread erzeugt, wie bei pthread_create(). Die Verwendung eines Gerätetreibers bietet den Vorteil, dass praktisch jedes Betriebssystem es erlaubt, solche Gerätetreiber nachträglich, d.h. dynamisch einzubringen und diese über standardisierte Schnittstellen von außen anzusprechen, ohne dass das bestehende Betriebssystem verändert werden müsste. Das Verpacken des Aufrufes an den Gerätetreiber erfolgt in eine Library-Routine mk_rtime(), die derart gestaltet ist, dass dann, wenn der Gerätetreiber nicht vorhanden ist, der laufende Thread bzw. der neu erzeugte Thread ein Thread des Host-Systems bleibt. Damit kann die Binärkompatibilität erreicht werden. Mittels einer sogenannten Service Demon ("demon thread") kann die RT-Fähigkeit bei großem Funktionsumfang gewährleistet werden.

FIG 5 zeigt eine schematische Darstellung eines ersten Rechnersystems mit im Betriebssystem eingebetteten Echtzeitanwendungssystem entsprechend FIG 2. Wie in FIG 5 gezeigt, ist damit nicht nur Sourcekompabilität, sondern sogar Binärkompatibilität erreichbar, eine Eigenschaft die insbesondere in der Entwicklungsphase für das Debugging von Vorteil ist. Es kann der funktionale Test vollständig unter dem Host-System mit all seinen Debugmöglichkeiten erfolgen. Natürlich sind durch das Zeitverhalten und eventuell notwendige Privilegien Grenzen gesetzt.

Zusätzlich dazu kann das RT-System auf bereits bestehenden RT-Kerneln aufgebaut werden und erleichtert damit wesentlich die Migration von Legacy-Systemen.

Insgesamt wir mit Hilfe des erfindungsgemäßen Verfahrens somit die Echtzeitfähigkeit für das nicht nicht-echtzeitfähige Hostsystem völlig transparent bereitgestellt werden. Der gesamte Prozess wird mit der regulären für das Hostsystem bereitgestellten Library gebunden. Es muss also für das RT-Anwendungssystem kein eigenes Erstellungssystem verwendet werden. Real-Time Threads des Prozesses können direkt auf Daten des gesamten Prozesses zugreifen, insbesondere alle Daten die durch Funktionen des Hostsystems verfügbar gemacht werden wie memory, mapped files oder Kommunikationspuffer. Intra-Prozess Kommunikation/Synchronisation (Mutex, Semaphoren, Message Queues, etc.) kann transparent d.h. auch zwischen RT-Threads und Threads des Hostsystems bereitgestellt werden. Ist kein "RT-Gerätetreiber" installiert, so kann das Anwendungssystem, soweit die Zeitverhältnisse es erlauben, völlig unverändert vollständig unter dem Host-System ablaufen. Weiter ist die bereits im Zusammenhang mit FIG 4 erwähnte Binärkompatibilität gegeben.

Im folgenden sollen nochmals die Kerneigenschaften des erfindungsgemäßen System bzw. Verfahrens herausgestellt werden:
Die Trennlinie zwischen Real-Time und Nicht-Real-Time erfolgt innerhalb eines Prozesses, d.h. die Aufteilung eines Prozesses erfolgt in Threads, die vom RT- System verwaltet werden, und in Threads, die vom "Host"-System verwaltet werden.
Es erfolgt eine Umschaltung der Systemaufrufeinsprungtabelle abhängig davon, welches System gerade aktiv ist. Damit ist es möglich, Systemaufrufe spezifisch auszuführen. Beispielsweise führt der in FIG 5 gezeigte Aufruf *pthread_create()* entweder zur Erzeugung eines Host-Threads oder zur Erzeugung eines RT-Threads. Damit kann die gleiche Library für das RT-System und das Host-System benutzt und damit das RT-System völlig transparent bereitgestellt werden.
Eine erstmalige Umschaltung während des Hochlaufs per Aufruf. Durch diesen Aufruf wird entweder der laufende Thread zu einem RT-Thread (vgl. FIG 3) oder es wird ein neuer RT-Thread erzeugt, wie bei pthread_create() (vgl. FIG 4). Dieser Aufruf ist als Gerätetreiberaufruf realisiert. Die Verwendung eines Gerätetreibers bietet den Vorteil, dass praktisch jedes Betriebssystem es erlaubt, solche Gerätetreiber nachträglich, d.h. dynamisch einzubringen und diese über standardisierte Schnittstellen von aussen anzusprechen, ohne dass das bestehende Betriebssystem verändert werden müsste.
Der Aufruf an den Gerätetreiber ist in einer Library-Routine mk_rtime()verpackt, die derart gestaltet ist, dass dann, wenn der Gerätetreiber nicht vorhanden ist, der laufende Thread bzw. der neu erzeugte Thread ein Thread des Host-Systems bleibt. Damit kann die Binärkompatibilität erreicht werden.

Mittels einer sogenannten Service Daemon (vg. FIG 3 und 4, "daemon thread") kann die RT-Fähigkeit bei großem Funktionsumfang gewährleistet werden.

Zusammenfassend betrifft die Erfindung somit ein Rechnersystem mit einem im Betriebssystem eingebetteten Echtzeitbetriebssystem, wobei das Rechnersystem zur Aufspaltung einer Echtzeitanwendung zur Ausführung durch das Betriebssystem und durch das Echtzeitbetriebssystem vorgesehen ist. Hierdurch kann auch bei einem nicht-echtzeitfähigen Rechnersystem eine transparente Bereitstellung einer Echtzeitfähigkeit erzielt werden. Echtzeitanwendungen können direkt auf die Daten aller im Rechnersystem ablaufenden Anwendungen zugreifen. Bevorzugt ist dieser Aufruf als Gerätetreiberaufruf innerhalb einer Library-Routine realisiert.

## Patentansprüche

1. Rechnersystem (6), insbesondere zum Einsatz im Bereich der Automatisierungstechnik für Echtzeitanwendungen,
• mit einem in einem auf dem Rechnersystem (6) ablauffähigen Standardbetriebssystem (1),
• mit einem im Standardbetriebssystem (1) eingebetteten Echtzeitbetriebssystem (2) und mit
• Mitteln (9) zur Aufteilung eines Prozesses in mindestens einen ersten Thread (4), der vom Echtzeitbetriebssystem (2) verwaltet wird, und in mindestens einen zweiten Thread (4), der vom Betriebssystem (1) verwaltet wird.

2. System nach Anspruch 1, **dadurch gekennzeichnet, dass** das Rechnersystem derart ausgestaltet ist, dass die Trennlinie zwischen dem ersten Thread (4), der vom Echtzeitbetriebssystem (2) verwaltet wird, und dem zweiten Thread (4), der vom Betriebssystem (1) verwaltet wird, innerhalb eines Prozesses erfolgt.

3. System nach einem der Ansprüche 1 oder 2, **dadurch gekennzeichnet , dass** das System Mittel zur Umschaltung einer Systemaufrufeinsprungtabelle aufweist, die davon abhängig ist, ob das Betriebssystem (1) oder das Echtzeitbetriebssystem (2) aktiv ist.

4. System nach einem der Ansprüche 1 bis 3, **dadurch gekennzeichnet , dass** die Mittel (9) zur Aufteilung eines Prozesses als Gerätetreiber ausgebildet sind.

5. System nach einem der Ansprüche 1 bis 4, **dadurch gekennzeichnet , dass** das System Mittel zur Erzeugung aller Threads eines Prozesses durch Aufruf an den Gerätetreiber aufweist, wodurch zur erstmaligen Umschaltung während des Hochlaufs alle Threads erzeugbar sind.

6. System nach einem der Ansprüche 1 bis 5, **dadurch gekennzeichnet , dass** zur Verpackung des Aufrufes an den Gerätetreiber eine Library-Routine (10) des Betriebssystems (1) vorgesehen ist.

7. System nach einem der Ansprüche 1 bis 6, **dadurch gekennzeichnet , dass** die Library-Routine (10) derart gestaltet ist, dass dann, wenn der Gerätetreiber nicht vorhanden ist, ein laufender Thread bzw. ein neu erzeugter Thread ein Thread des Betriebssystems (1) bleibt.

8. System nach einem der Ansprüche 1 bis 7, **dadurch gekennzeichnet , dass** das Rechnersystem (6) derart ausgebildet ist, dass dann, wenn das Echtzeitanwendungssystem (2) aktiv wird und einen zweiten Thread (4) ausführt, auch von einer ersten auf eine zweite Systemeinsprungtabelle umgeschaltet wird.

9. Verfahren zum Betrieb eines Rechnersystems (6), insbesondere im Bereich der Automatisierungstechnik für Echtzeitanwendungen, bei dem zusätzlich zu einem auf dem Rechnersystem (6) ablauffähigen Betriebssystem (1) ein ins Betriebssystem (1) eingebettetes Echtzeitbetriebssystem (2) installiert wird und bei dem ein Prozess in mindestens einen ersten Thread (4), der vom Echtzeitbetriebssystem (2) verwaltet wird, und in mindestens einen zweiten Thread (4), der vom Betriebssystem (1) verwaltet wird, aufgeteilt wird.

10. Verfahren nach Anspruch 9, **dadurch gekennzeichnet, dass** die Trennlinie zwischen dem ersten Thread (4), der vom Echtzeitbetriebssystem (2) verwaltet wird, und dem zweiten Thread (4), der vom Betriebssystem (1) verwaltet wird, innerhalb eines Prozesses erfolgt.

11. Verfahren nach einem der Ansprüche 9 oder 10, **dadurch gekennzeichnet , dass** eine Systemaufrufeinsprungtabelle in der Weise umgeschaltet wird, die davon abhängig ist, ob das Betriebssystem (1) oder das Echtzeitbetriebssystem (2) aktiv ist.

12. Verfahren nach einem der Ansprüche 9 bis 11, **dadurch gekennzeichnet, dass** der Prozess in mindestens einen ersten und in mindestens einen zweiten Thread (4) durch einen Gerätetreiber aufgeteilt wird.

13. Verfahren nach einem der Ansprüche 9 bis 12, **dadurch gekennzeichnet , dass** alle Threads (4, 5) eines Prozesses zur erstmaligen Umschaltung während des Hochlaufs durch Aufruf an den Gerätetreiber erzeugt werden.

14. Verfahren nach einem der Ansprüche 9 bis 13, **dadurch gekennzeichnet, dass** der Aufrufes an den Gerätetreiber in einer Library-Routine (10) des Betriebssystems verpackt ist.

15. Verfahren nach einem der Ansprüche 9 bis 14, **dadurch gekennzeichnet, dass** die Library-Routine (10) derart gestaltet ist, dass dann, wenn der Gerätetreiber nicht vorhanden ist, ein laufender Thread bzw. ein neu erzeugter Thread ein Thread des Betriebssystems (1) bleibt.

16. Verfahren nach einem der Ansprüche 9 bis 15, **dadurch gekennzeichnet, dass** das Rechnersystem (6) derart ausgebildet ist, dass dann, wenn das Echtzeitanwendungssystem (2) aktiv wird und einen zweiten Thread (4) ausführt, auch von einer ersten auf eine zweite Systemeinsprungtabelle umgeschaltet wird.

17. Computerprogrammprodukt, das auf einem Rechnersystem ablauffähig ist und das Softwaremittel zur Durchführung des Verfahrens nach einem der Ansprüche 9 bis 16 aufweist.
